# EUROPEAN PATENT APPLICATION

(11) **EP 2 756 926 A1**
(43) Date of publication of application: **23.07.2014**
(21) Application number: 12832556.0
(22) Date of filing: 10.07.2012
(51) Int. Cl.: B25F 5/00, B24B 23/04

(54) **ELECTRIC TOOL**

(30) Priority: 12.09.2011 JP 2011198662
(71) Applicant: Makita Corporation, Anjo-shi, Aichi 446-8502 (JP)
(72) Inventor: SUGIURA Shin, Anjo-shi Aichi 446-8502 (JP); FUKUMOTO Tadashi, Anjo-shi Aichi 446-8502 (JP); MIZUTANI Akira, Anjo-shi Aichi 446-8502 (JP)
(74) Representative: Kramer - Barske - Schmidtchen
(86) International application number: PCT/JP2012/067566
(87) International publication number: WO 2013/038789

(57) **Abstract**

TASK

It is an object to provide an electric power tool with improved workability in a dark place.

SOLUTION TO PROBLEM

In an electric power tool 1 that includes a housing 2 extending in a longitudinal direction and accommodating a motor 4, a spindle 17 driven by the motor 4 and protruding downward from a front end of the housing 2, and a distal end tool coupled to an end of the spindle 17, a light-emitting diode (LED) 27 capable of emitting light downward is provided in an upper part of a front of the housing 2. The LED 27 is disposed rearward of a front end face 26 of the housing 2 in the longitudinal direction.

## Description

### TECHNICAL FIELD

The present invention relates to electric power tools in which a housing extends in a longitudinal direction and accommodates a motor, an output shaft is driven by the motor and protrudes downward from a front end of the housing, and a distal end tool is coupled to an end of the output shaft.

### BACKGROUND ART

For example, Patent Document 1 discloses a grinder in which a housing extends in a longitudinal direction, a disc-shaped grinding stone as a distal end tool is attached to an output shaft, and the output shaft protrudes downward from a front end of the housing. The grinder includes a light-emitting diode (LED) in the housing and the LED emits light forward of the housing through a transparent cover. The light from the LED facilitates grinding operation using the grinder in a dark place.

### CITATION LIST

### PATENT DOCUMENT

[Patent Document 1] United States Patent No. 7,568,288

### SUMMARY OF INVENTION

### TECHNICAL PROBLEM

In this grinder, a lighting body such as the LED emits light forward of the housing during operation in the dark place, but may not be able to emit a sufficient amount of light to a location below the housing. Accordingly, a distal end tool such as the grinding stone located below the housing may not be illuminated by the light. This may reduce workability in the grinding operation etc. using the distal end tool in the dark place.

The present invention has been developed in view of the above situation, and it is an object of the present invention to provide an electric power tool with improved workability in a dark place.

### SOLUTION TO PROBLEM

An invention according to claim 1 is an electric power tool that includes a housing extending in a longitudinal direction, a motor accommodated in the housing, an output shaft protruding downward from a front end of the housing and being driven by the motor, a distal end tool coupled to an end of the output shaft, and a lighting body provided in an upper part of a front of the housing and capable of emitting light downward.

An invention according to claim 2 is the electric power tool in claim 1, wherein the lighting body is disposed rearward of a front end face of the housing in the longitudinal direction.

An invention according to claim 6 is the electric power tool in claim 1, wherein a rotation operation portion capable of rotationally moving the lighting body in a vertical direction is provided on the upper part of the front of the housing.

### ADVANTAGEOUS EFFECTS OF INVENTION

In the electric power tool according to the invention of claim 1, light can be emitted from the lighting body to the distal end tool coupled to the end of the output shaft. Therefore, even in a dark place, a user can visually check the distal end tool illuminated by the lighting body, which can improve workability of the electric power tool.

According to the invention of claim 2, in the case of using, e.g., a cutting tool as the distal end tool, the cutting tool can be used to its maximum cutting length to cut a workpiece. The lighting body, thus, does not hinder the operation of cutting the workpiece with the distal end tool.

According to the invention of claim 6, the lighting body can be moved to any position in the vertical direction using the rotation operation portion. Accordingly, light can be emitted from the LED in any direction.

### BRIEF DESCRIPTION OF DRAWINGS

[FIG. 1] FIG. 1 is a partial side view of a reciprocating electric power tool according to a first embodiment of the present invention.
[FIG. 2] FIG. 2 is a side view of the reciprocating electric power tool of the first embodiment, showing an internal structure of a front end of a housing.
[FIG. 3] FIG. 3 is a front view of the reciprocating electric power tool of the first embodiment.
[FIG. 4] FIG. 4 is a partial side view of a reciprocating electric power tool according to a second embodiment.
[FIG. 5] FIG. 5 is a side view of the reciprocating electric power tool of the second embodiment, showing an internal structure of a front end of a housing.
[FIG. 6] FIG. 6 is a front view of the reciprocating electric power tool of the second embodiment.
[FIG. 7] FIG. 7 is a sectional view taken along line A-A in FIG. 4.

### DESCRIPTION OF EMBODIMENTS

### <First Embodiment>

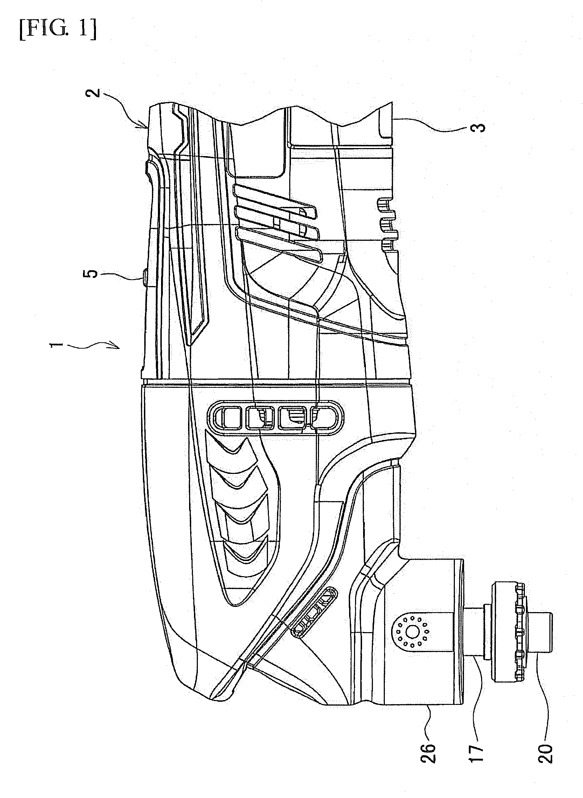

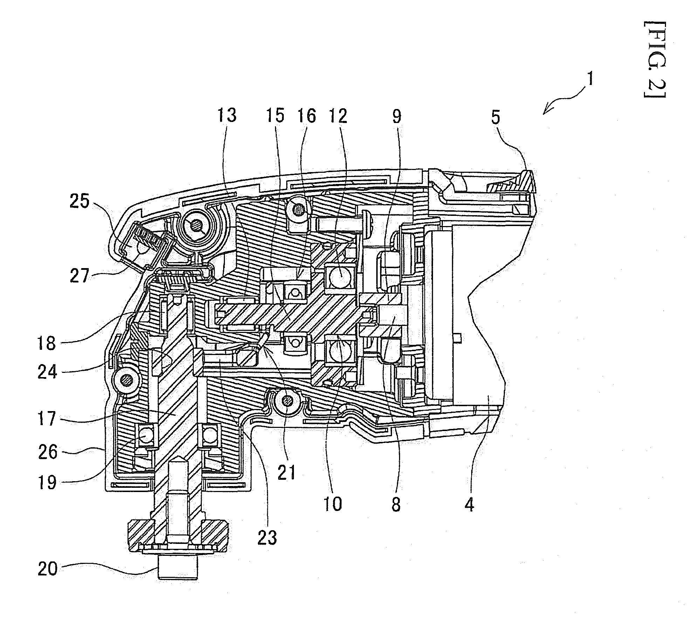

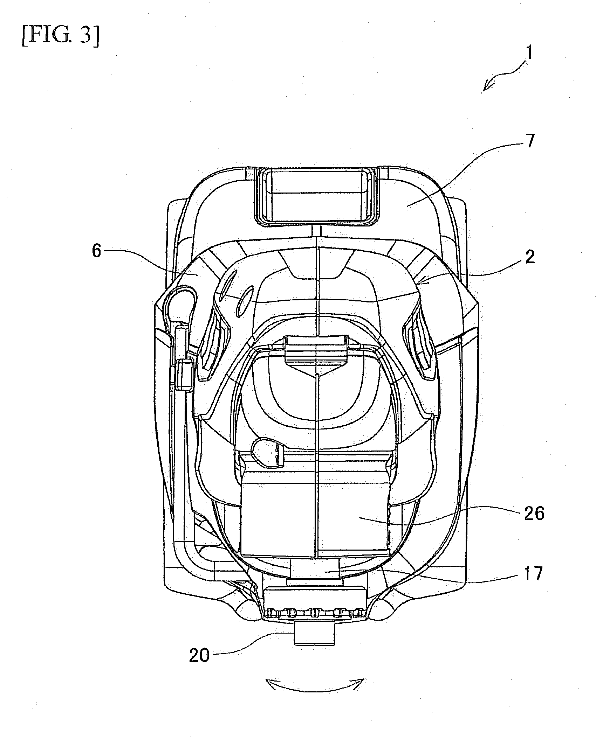

A first embodiment of the present invention will be described with reference to FIGS. 1 to 3. A reciprocating electric power tool shown in FIGS. 1 to 3 includes a housing 2 having a circular section and extending in a longitudinal direction of the reciprocating electric power tool 1 (the lateral direction in FIGS. 1 and 2). A handle portion 3 (see FIG. 1) for the user to grip is formed on an outer periphery of the housing 2, and a motor 4 (see FIG. 2) is accommodated in the housing 2. The housing 2 is further provided with a switch 5 capable of switching on and off the motor 4. In addition, a battery mount portion 6 (see FIG. 3) is provided at a rear end of the housing 2. A battery pack 7 that supplies power to the motor 4 when the switch 5 is on is detachably mounted on the battery mount portion 6. The reciprocating electric power tool 1 is an example of the electric power tool of the present invention.

As shown in FIG. 2, a shaft member 10 is coupled to a front part of a rotating shaft 8 of the motor 4 in the housing 2 via a coupling member 9. The shaft member 10 is supported in the housing 2 so as to be rotatable via bearings 12, 13. An eccentric shaft portion 15 is formed substantially in the central part in the axial direction of the shaft member 10. A bearing 16 having an arc-shaped outer race is mounted so as to be fitted on the eccentric shaft portion 15.

As shown in FIG. 2, at the front end of the housing 2, a spindle 17 is supported in the housing 2 via bearings 18, 19, and the end of the spindle 17 protrudes downward from the housing 2. Various distal end tools that have different shapes and are used for different purposes, such as a cutting tool or a grinding tool, can be fixed to the end of the spindle 17 with a bolt 20 (see FIG. 2). The spindle 17 is an example of the output shaft of the present invention.

As shown in FIG. 2, a link member 21 is supported between the shaft member 10 and the spindle 17 in the housing 2. The link member 21 includes a pair of engagement portions, not shown, and an arm portion 23. The pair of engagement portions are arranged outside the shaft member 10 so as to be parallel to each other. The bearing 16 is placed in a space interposed between the engagement portions. The arm portion 23 protrudes from a body of the link member 21 toward the spindle 17, and a spindle positioning hole 24 is formed in the arm portion 23. The spindle 17 is press-fitted in the spindle positioning hole 24.

In addition, as shown in FIG. 2, an accommodating recess 25 that is tilted obliquely downward toward the front side of the housing 2 so as to open downward is formed in the upper part of the front of the housing 2. This accommodating recess 25 is located rearward of a front end face 26 of the housing 2 in the longitudinal direction of the housing 2. An LED 27 is accommodated in the accommodating recess 25 in a state where its light-emitting portion faces obliquely downward toward the front. The LED 27 is thus disposed rearward of the front end face 26 in the longitudinal direction. The LED 27 is electrically connected to the battery pack 7 by a lead wire, not shown, and can emit light in response to operation of a switch that controls current to be applied and not applied to the LED 27. The LED 27 is an example of the lighting body of the present invention.

An operation of cutting a pillar-shaped material standing on a floor in a dark place by using the reciprocating electric power tool 1 will be described as an example. The user turns on the switch 5 while gripping the handle portion 3 to drive the motor 4. In addition, the user turns on the switch that controls current application to the LED 27 so that the LED 27 emits light. As the rotating shaft 8 of the motor 4 rotates, the bearing 16 mounted on the eccentric shaft portion 15 eccentrically rotates about the shaft member 10. During the eccentric rotation, the bearing 16 repeats the motion of contacting the engagement portions of the link member 21 only in the lateral direction, whereby the link member 21 reciprocates laterally as viewed from the front of the reciprocating electric power tool 1, as shown by arrow in FIG. 3. The spindle 17 and the cutting tool fixed thereto reciprocate laterally about the axis of the spindle 17 accordingly. The user cuts the pillar-shaped material by pressing the reciprocating cutting tool against the pillar-shaped material while keeping the spindle 17 perpendicular to the floor. When the pillar-shaped material is cut, light emitted from the LED 27 radiates obliquely downward toward the front from the upper part of the front of the housing 2 through the opening of the accommodating recess 25. The cutting tool protruding forward from the spindle 17 is thus illuminated by the light. Accordingly, the user can cut the pillar-shaped material even in the dark place while the user visually checks the cutting tool with the light from the LED 27.

In addition, since the LED 27 is disposed rearward of the front end face 26 in the longitudinal direction of the housing 2, the cutting tool can be used to its maximum cutting length when the pillar-shaped material is cut. Therefore, the operation of cutting the pillar-shaped material with the cutting tool is not hindered even though the LED 27 is disposed in the housing 2.

### <Effects of First Embodiment>

In the reciprocating electric power tool 1 of the present embodiment, light can be emitted from the LED 27 to the cutting tool fixed to the end of the spindle 17. Therefore, even in a dark place, the user can visually check the cutting tool illuminated by the LED 27, which improves workability in cutting the pillar-shaped material with the reciprocating electric power tool 1.

Moreover, when cutting the pillar-shaped material, the cutting tool can be used to its maximum cutting length. Accordingly, the LED 27 does not hinder the operation of cutting the pillar-shaped material with the cutting tool.

### <Second Embodiment>

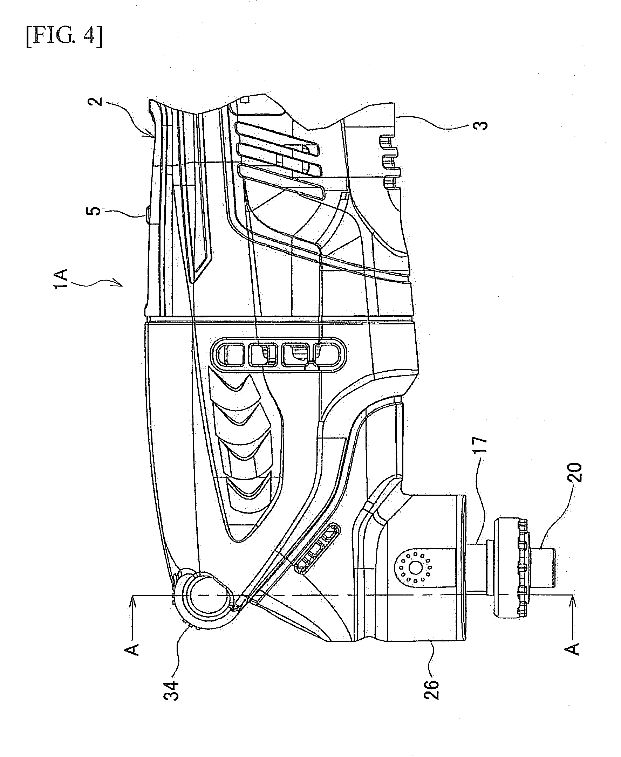

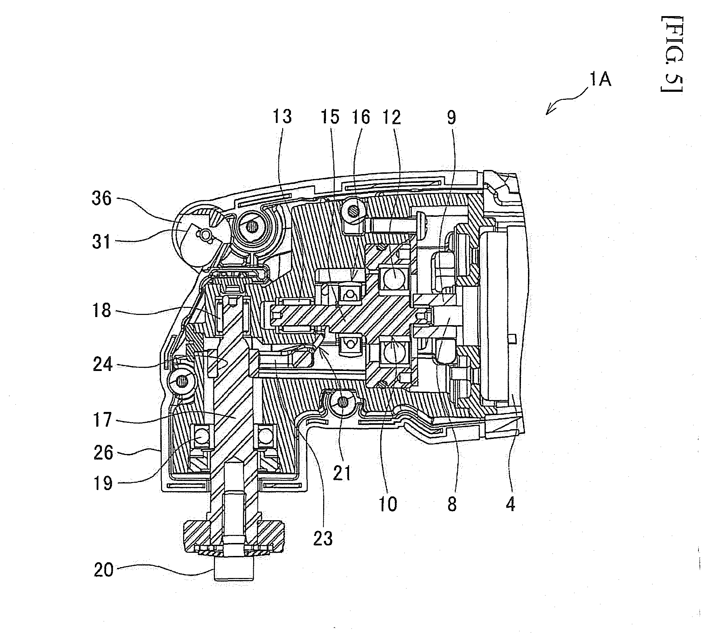

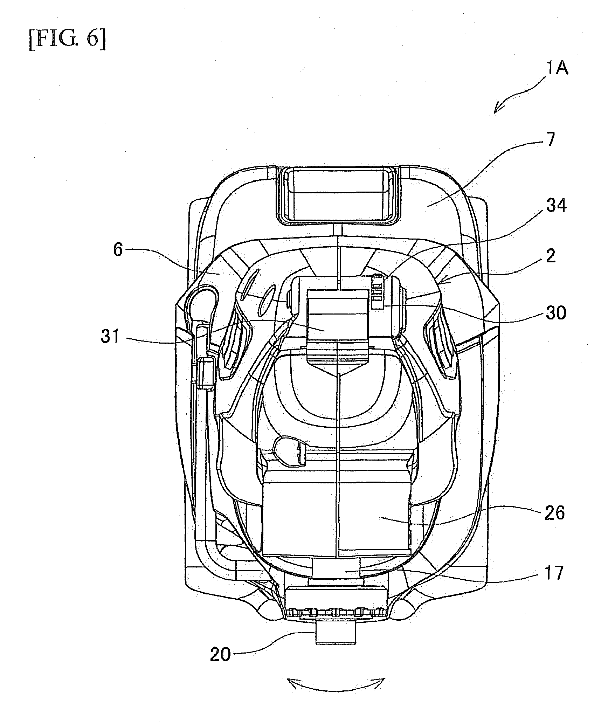

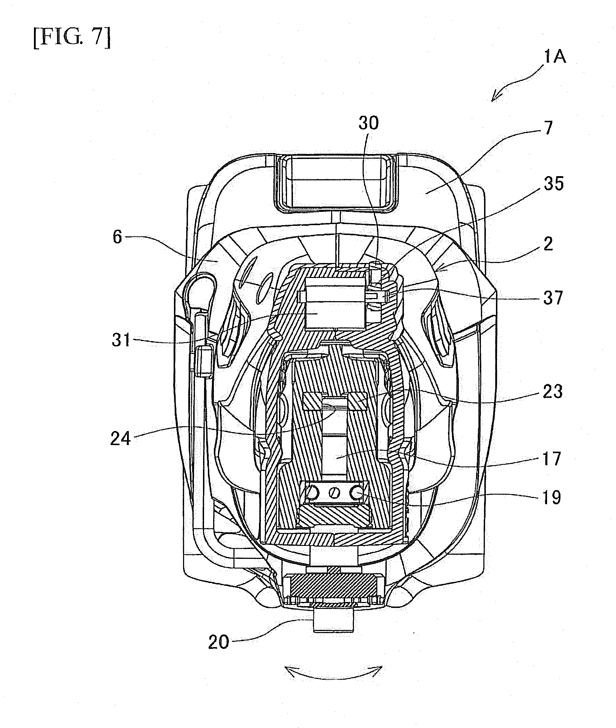

A second embodiment of the present invention will be described with reference to FIGS. 4 to 7. In the second embodiment, the same configurations as those of the first embodiment are denoted by the same reference characters, and description thereof will be omitted. In a reciprocating electric power tool 1A shown in FIGS. 4 to 6, a rotation operation portion 30 (see FIG. 6) capable of being manually rotated in the vertical direction is provided on the upper part of the front of the housing 2. The rotation operation portion 30 is a plate-like member having a fan shape as viewed from a side and is capable of rotating in the vertical direction. A plurality of operation protrusions 34 (see FIGS. 4 and 6) are formed on the outer surface of the rotation operation portion 30. Moreover, an accommodating recess 36 (see FIG. 5) for an LED unit 31 in which an LED is disposed is formed in the upper part of the front of the housing 2 so as to open on the front side. The LED unit 31 is accommodated in the accommodating recess and protrusion 36 in a state where a light-emitting portion of the LED faces toward the opening. As shown in FIG. 7, a shaft member 37 extending in the lateral direction of the reciprocating electric power tool 1A (the lateral direction in FIG. 7) is attached to the LED unit 31, and an attachment portion 35 provided on the rotation operation portion 30 is fitted on the shaft member 37.

Operation of the reciprocating electric power tool 1A will be described. When cutting a pillar-shaped material standing on a floor in a dark place by using the reciprocating electric power tool 1A, a user rotates the rotation operation portion 30 in the vertical direction while touching the operation protrusions 34. This can move the LED disposed in the LED unit 31 to any position in the vertical direction by using the shaft member 37 as a rotation center. Accordingly, even when different kinds of distal end tools are fixed to the spindle 17 and protrude from the spindle 17 by different lengths, such distal end tools can be illuminated by the light from the LED by the rotation operation of the rotation operation portion 30. Therefore, the user can cut the pillar-shaped material even in the dark place while the user visually checks the cutting tool with the light from the LED.

### <Effects of Second Embodiment>

In the reciprocating electric power tool 1A of the present embodiment, the LED disposed in the LED unit 31 can be moved to any position in the vertical direction by the rotation operation portion 30. Accordingly, light can be emitted from the LED in any direction.

The present invention is not limited to the above embodiments, and the configuration may be partially modified as appropriate without departing from the spirit and scope of the invention. For example, unlike the above embodiments, a light bulb may be used instead of the LED. The above embodiments are described with respect to an example in which the present invention is applied to the rechargeable reciprocating electric power tools 1, 1A. However, the present invention is not limited to them, and the present invention may be applied to an alternating-current (AC) driven reciprocating electric power tool or a rechargeable or AC driven angle power tool.

### DESCRIPTION OF REFERENCE NUMERALS

- 1, 1A: Reciprocating Electric Power Tool
- 2: Housing
- 4: Motor
- 17: Spindle
- 26: Front End Face of Housing
- 27: LED
- 30: Rotation Operation Portion

## Claims

1. An electric power tool, comprising:
a housing extending in a longitudinal direction;
a motor accommodated in the housing;
an output shaft that protrudes downward from a front end of the housing and that is driven by the motor;
a distal end tool coupled to an end of the output shaft; and
a lighting body provided in an upper part of a front of the housing and capable of emitting light downward.

2. The electric power tool according to claim 1, wherein
the lighting body is disposed rearward of a front end face of the housing in the longitudinal direction.

3. The electric power tool according to claim 1, wherein
an accommodating recess that is tilted obliquely downward toward the front of the housing so as to open downward is formed in the upper part of the front of the housing, and the lighting body is accommodated in the accommodating recess.

4. The electric power tool according to claim 2, wherein
an accommodating recess that is tilted obliquely downward toward the front of the housing so as to open downward is formed in the upper part of the front of the housing so as to be located rearward of the front end face of the housing in the longitudinal direction, and the lighting body is accommodated in the accommodating recess.

5. The electric power tool according to claim 3 or 4, wherein
the lighting body is a light-emitting diode.

6. The electric power tool according to claim 1, wherein
a rotation operation portion capable of rotationally moving the lighting body in a vertical direction is provided on the upper part of the front of the housing.

7. The electric power tool according to claim 6, wherein
an operation protrusion is formed on an outer peripheral surface of the rotation operation portion.

8. The electric power tool according to claim 7, wherein
an accommodating recess that opens on a front side to accommodate the lighting body is formed in the upper part of the front of the housing, and the rotation operation portion is fitted on a shaft member that rotatably supports the lighting body.

9. The electric power tool according to claim 7, wherein
an accommodating recess that opens on a front side to accommodate the lighting body is formed in the upper part of the front of the housing so as to be located rearward of a front end face of the housing in the longitudinal direction of the housing, and the rotation operation portion is fitted on a shaft member that rotatably supports the lighting body.

10. The electric power tool according to claim 8 or 9, wherein
the lighting body is a light-emitting diode unit having a light-emitting diode disposed therein.

11. The electric power tool according to claim 1, wherein
the electric power tool is a reciprocating electric power tool that laterally reciprocates the output shaft by driving of the motor.
